# EUROPEAN PATENT APPLICATION

(11) **EP 3 188 479 A1**
(43) Date of publication of application: **05.07.2017**
(21) Application number: 16739389.1
(22) Date of filing: 23.06.2016
(51) Int. Cl.: H04N 7/14

(54) **ADAPTIVE VIDEO DEFINITION ADJUSTMENT METHOD AND APPARATUS, TERMINAL DEVICE, AND STORAGE MEDIUM**

(30) Priority: 09.11.2015 CN 201510757886
(71) Applicant: LE Holdings (Beijing) Co., Ltd., Beijing 100025 (CN); Le Shi Zhi Xin Electronic Technology (Tianjin) Limited, Tianjin 300450 (CN)
(72) Inventor: LI, Yingjie, Tianjin 300467 (CN)
(74) Representative: Zardi, Marco
(86) International application number: PCT/CN2016/086897
(87) International publication number: WO 2017/080214

(57) **Abstract**

The invention provides a method and apparatus for adjusting the definition of a video adaptively, a terminal device, and a storage medium, where a definition parameter of the video is dynamically adjusted adaptively according to a terminal parameter influencing the quality of a video call so as to ensure the video call in normal operation, and also better fluidity thereof. The method includes: detecting a terminal parameter influencing a quality of a video call, in a terminal device participating in the video call; and adjusting a definition parameter of the video upon determining that the terminal parameter satisfies a preset condition; wherein the definition parameter of the video includes any one or combination of a resolution, a bit rate, and a frame rate of the video.

## Description

This application claims the benefit of Chinese Patent Application No. 201510757886.9, filed with the Chinese Patent Office on November 09, 2015 and entitled "A method and apparatus for adjusting the definition of a video adaptively, and a terminal device", which is hereby incorporated by reference in its entirety.

### Field

The present invention relates to the field of communications, and particularly to a method and apparatus for adjusting the definition of a video adaptively, a terminal device, and a storage medium.

### Background

At present, video call has gradually become indispensable communication means in daily working and living of people along with rapid development of wireless communications. The resolution of a video in existing video call is initialized as a fixed resolution of the video so that the resolution of the video is kept unchanged throughout video call.

A drawback of the existing video call implementation lies in that if such a condition occurs during communication that the utilization ratio of a Central Processing Unit (CPU) in a mobile terminal is too high, a memory in the mobile terminal is insufficient, or the speed of an access to the Internet is too low, etc., if the preset initial parameter is still applied, then a display interface of the video may buffers and be paused, blurred, etc., and if the load of the CPU in the mobile terminal is too heavy, or there is a very poor wireless signal over the Internet, then video call may frequently be standstill and even broken, thus greatly degrading the experience of a user in a video call service.

### Summary

Embodiments of the invention provide a method and apparatus for adjusting the definition of a video adaptively, a terminal device, and a storage medium so as to address such a problem in the prior art that if the utilization ratio of a CPU in a video call device is too high, the speed of an access to the Internet is too low, etc. during the video call, then a display interface of the video may buffer and be parused, blurred, etc., by adjusting dynamically a definition parameter of the video to ensure the definition and fluidity of the video interface.

An embodiment of the invention provides a method for adjusting the definition of a video adaptively, the method including: detecting a terminal parameter influencing a quality of a video call, in a terminal device participating in the video call; and adjusting a definition parameter of the video upon determining that the terminal parameter satisfies a preset condition; wherein the definition parameter of the video includes any one or combination of a resolution, a bit rate, and a frame rate of the video.

An embodiment of the invention provides an apparatus for adjusting the definition of a video adaptively, the apparatus including: a detecting module configured to detect a terminal parameter influencing a quality of a video call, in a terminal device participating in the video call; and an adaptively adjusting module configured to adjust a definition parameter of the video upon determining that the terminal parameter satisfies a preset condition; wherein the definition parameter of the video includes any one or combination of a resolution, a bit rate, and a frame rate of the video.

An embodiment of the invention provides a terminal device including a detecting component, a memory, and one or more processors, wherein one or more programs are stored in the memory, and when the one or more programs are executed by the one or more processors: the detecting component is configured to detect a terminal parameter influencing a quality of a video call, in the terminal device participating in the video call; and the processor is configured to adjust a definition parameter of the video upon determining that the terminal parameter satisfies a preset condition; wherein the definition parameter of the video includes any one or combination of a resolution, a bit rate, and a frame rate of the video.

An embodiment of the invention provides another terminal device including a processor and a memory, wherein the memory stores therein program for performing the operations of: detecting a terminal parameter influencing a quality of a video call, in the terminal device participating in the video call; and adjusting a definition parameter of a video upon determining that the terminal parameter satisfies a preset condition, wherein the definition parameter of the video includes any one or combination of a resolution, a bit rate, and a frame rate of the video; and the processor is configured to execute the program stored in the memory.

An embodiment of the invention provides a storage medium and a program is stored therein for performing the method for adjusting the definition of a video adaptively according to the embodiment above of the invention.

In the method and apparatus for adjusting the definition of a video adaptively, the terminal device, and the storage medium according to the embodiments of the invention, the terminal parameter influencing the quality of a video call, e.g., the CPU load detection parameter, the network bandwidth, etc., can be detected in the terminal device participating in the video call, and the definition parameter (any one or combination of the bit rate, the frame rate, and the resolution) of the video can be dynamically adjusted adaptively according to the terminal parameter influencing the quality of the video call to thereby ensure the video call to be in normal operation, and also better fluidity thereof. The embodiments of the invention can address such problems that the display interface of the video may buffer and be paused, or blurred, and even the video call may be broken due to a too high utilization ratio of the CPU, an insufficient memory, or a too low network speed, etc., during the video call.

### Brief Description of the Drawings

In order to make the technical solutions according to the embodiments of the invention or in the prior art more apparent, the drawings to which a description of the embodiments or the prior art refers will be briefly introduced below, and apparently the drawings to be described below are merely illustrative of some of the embodiments of the invention, and those ordinarily skilled in the art can derive from these drawings other drawings without any inventive effort. In the drawings:
Fig.1 is a schematic flow chart of a method for adjusting the definition of a video adaptively according to an embodiment of the invention;
Fig.2 is a flow chart of a first embodiment of a method for adjusting the definition of a video adaptively according to an embodiment of the invention;
Fig.3 is a flow chart of a second embodiment of a method for adjusting the definition of a video adaptively according to an embodiment of the invention; and
Fig.4 is a schematic structural diagram of an apparatus for adjusting the definition of a video adaptively according to an embodiment of the invention.

### Detailed Description of the Embodiments

In order to make the objects, technical solutions, and advantages of the embodiments of the invention more apparent, the technical solutions according to the embodiments of the invention will be described below clearly and fully with reference to the drawings in the embodiments of the invention, and apparently the embodiments described below are only a part but not all of the embodiments of the invention. Based upon the embodiments here of the invention, all the other embodiments which can occur to those skilled in the art without any inventive effort shall fall into the scope of the invention.

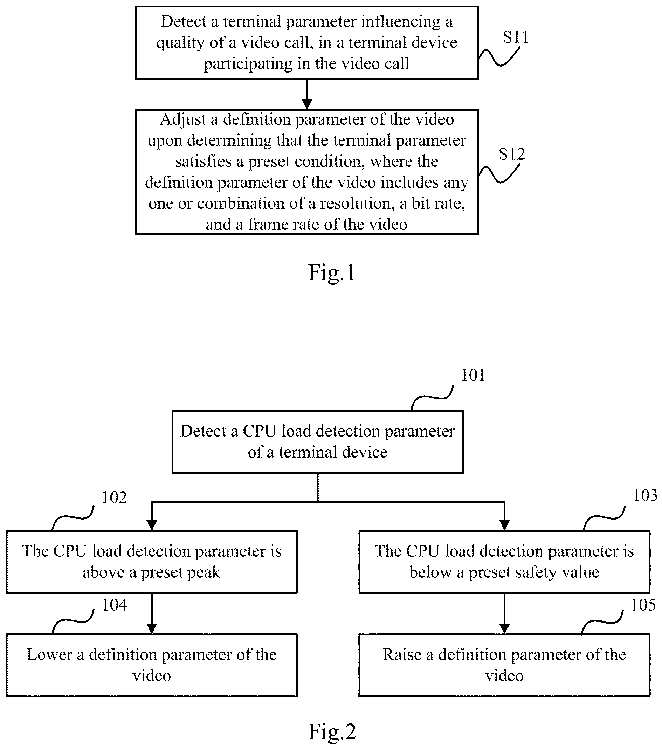

As illustrated in Fig.1, a method for adjusting the definition of a video adaptively according to an embodiment of the invention includes:
The operation S11 is to detect a terminal parameter influencing a quality of a video call, in a terminal device participating in the video call;
In a particular implementation, the terminal parameter influencing the quality of the video call can be detected in the terminal device participating in the video call by a hardware device in the terminal device, e.g., a detector, or by software program installed in the terminal device, e.g., device performance monitoring program, or as in the prior art, but the embodiment of the invention will not be limited to any particular scheme to detect the terminal parameter influencing the quality of the video call, where the terminal device can be a computer, a tablet computer, a handset, or another wearable intelligent device.

In an embodiment of the invention, the terminal parameter includes any one or combination of a current CPU load detection parameter, a current memory utilization ratio, and a current network bandwidth, and of course, in another embodiment of the invention, the terminal parameter can further be another parameter, e.g., CPU temperature, etc.

The operation S12 is to adjust a definition parameter of the video upon determining that the terminal parameter satisfies a preset condition, where the definition parameter of the video includes any one or combination of a resolution, a bit rate, and a frame rate of the video.

In a particular implementation, the definition parameter of the video is adjusted upon determining that the terminal parameter satisfies the preset condition by lowering the definition parameter of the video upon determining that the terminal parameter satisfies a first preset condition, and raising the definition parameter of the video upon determining that the terminal parameter satisfies a second preset condition, particularly as follows:
The first preset condition includes any one or combination of the following conditions:
   A first condition that the terminal parameter includes the current CPU load detection parameter and the current CPU load detection parameter reaches a preset peak, where the CPU load detection parameter characterizes a CPU utilization ratio of the terminal device, and if the current CPU load detection parameter of the terminal device reaches the preset peak, then it will indicate that the operating CPU is overloaded, and if the video call continues at the current definition, then the video call may buffer and be paused at a picture, etc., and the performance of the terminal device may be degraded, so the definition parameter of the video should be lowered, where the preset peak can be set freely, for example, the preset peak is 90%.

A second condition that the terminal parameter includes the current memory utilization ratio and the current memory utilization ratio is above a first preset threshold, where the memory utilization ratio characterizes a use condition of a memory space in the terminal device, and if the current memory utilization ratio of the terminal device is above the first preset threshold, then it will indicate that the used memory space of the terminal device has been approximately the full space, and if the video call continues at the current definition, then the video may buffer and be paused, etc., and the performance of the terminal device may be degraded, so the definition parameter of the video should be lowered, where the first preset threshold can be set freely, for example, the value of the first preset threshold is 90%.

A third condition that the terminal parameter includes the current network bandwidth and the current network bandwidth is below a second preset threshold, where the current network bandwidth influences a data transmission speed in the video call of the terminal device, and if the current network bandwidth is below the second preset threshold, then it will indicate that the current network bandwidth is too low, and if the video call continues at the current definition, then the video call may buffer and be paused, blurred, etc., so the definition parameter of the video should be lowered, where the second preset threshold can be set freely, for example, the value of the second preset threshold is 500K.

In a particular implementation, the first condition, the second condition, and the third condition can be applied in combination or separately, that is, if the terminal parameter satisfies one or more of the first condition, the second condition, and the third condition, then the definition parameter of the video will be lowered, and the definition parameter of the video may include any one or combination of a resolution, a bit rate, and a frame rate of the video, so in a particular implementation, the definition parameter of the video can be lowered by dividing in advance the resolution, the bit rate, and the frame rate of the video into a number of levels in a descending order, and lowering the resolution, the bit rate, and/or the frame rate of the video by at least one level.

The second preset condition includes any one or combination of:
a condition A that the terminal parameter includes the current CPU load detection parameter below a preset safety value, where the CPU load detection parameter characterizes a CPU utilization ratio of the terminal device, and if the current CPU load detection parameter of the terminal device is below the preset safety value, then it will indicate that the CPU can process more data, so the definition parameter of the video may be raised to improve the quality of the video, where the preset safety value can be set freely while ensuring the preset safety value to be below a preset peak, for example, the preset peak is 40%.
a condition B that the terminal parameter includes the current memory utilization ratio below a third preset threshold, where the memory utilization ratio characterizes a use condition of a memory space in the terminal device, and if the current memory utilization ratio of the terminal device is below the third preset threshold, then it will indicate that a part of the memory space of the terminal device is still available, so the definition parameter of the video may be raised to thereby improve the quality of the video call, where the third preset threshold can be set freely while ensuring the third preset threshold below the first preset threshold, for example, the value of the third preset threshold is 40%.
a condition C that the terminal parameter includes the current network bandwidth above a fourth preset threshold, where the current network bandwidth influences a data transmission speed in the video call of the terminal device, and if the current network bandwidth is above the fourth preset threshold, then it will indicate that the current network bandwidth is high, so the definition parameter of the video may be raised to thereby improve the quality of video call, where the fourth preset threshold can be set freely while ensuring the fourth preset threshold to be above the second preset threshold, for example, the value of the fourth preset threshold is 10M.

In a particular implementation, the condition A, the condition B, and the condition C can be applied in combination or separately, that is, if the terminal parameter satisfies one or more of the condition A, the condition B, and the condition C, then the definition parameter of the video will be raised, and the definition parameter of the video may include any one or combination of a resolution, a bit rate, and a frame rate of the video, so in a particular implementation, the definition parameter of the video can be raised by dividing in advance the resolution, the bit rate, and the frame rate of the video into a number of levels in a descending order, and raising the resolution, the bit rate, and/or the frame rate of the video by at least one level.

A method for adjusting the definition of a video adaptively according to an embodiment of the invention will be described below in particular embodiments thereof.

Fig.2 is a flow chart of a first embodiment of the method for adjusting the definition of a video adaptively according to an embodiment of the invention, and as illustrated in Fig.2, the method according to this embodiment can include:
The operation 101 is to detect a current CPU load detection parameter of a terminal device participating in a video call;
The operation 102 is to determine from the detected current CPU load detection parameter whether the current CPU load detection parameter reaches or is above a preset peak, and if it is determined that the current CPU load detection parameter reaches or is above the preset peak, then the flow will proceed to the operation 104;
The operation 103 is to determine whether the current CPU load detection parameter is below a preset safety value, and if it is determined that it is below the preset safety value, then the flow will proceed to the operation 105;
The operation 104 is to lower a definition parameter of the video according to a preset adjusting strategy; and
The operation 105 is to raise a definition parameter of the video according to a preset adjusting strategy.

In an embodiment of the invention, generally the following video definition parameter influences a real-time video quality and display effect:
a parameter A represents a bit rate of the video ranging from 1000 to 2000 bits/seconds (bits/s), that is, more than or equal to 1000 bits/s, and less than or equal to 2000 bits/s. In this embodiment, the bit rate of the video is divided into levels of 1000 bits/s, 1100 bits/s, 1200 bits/s, 1300 bits/s, 1400 bits/s, 1500 bits/s, etc.
a parameter B represents a frame rate (Frames Per Second (FPS)) of the video ranging from 10 to 20 frames/second (frames/s), that is, more than or equal to 10 frames/s, and less than or equal to 20 frames/s. In this embodiment, the frame rate of the video is divided into levels of 10 frames/s, 11 frames/s, 12 frames/s, 13 frames/s, 14 frames/s, 15 frames/s, etc.
a parameter C is a resolution of the video including levels of 720P, 480P, 320P, etc.

There is the following terminal parameter influencing a quality of the video, and a real-time user experience effect of the video in a video call:
a first parameter: a CPU overuse detection parameter, generally configured to detect the utilization ratio of a CPU in the terminal device.

In this embodiment, the definition parameter of the video is adjusted according to the preset adjustment strategy particularly as follows:
Bit rates and frame rates of the video supported by the terminal device are divided in advance into a number of levels (e.g., three to six levels) in a descending order respectively, and for the value of the current CPU load detection parameter:
   If the CPU load detection parameter reaches the preset peak, then the resolution, the frame rate, and/or the bit rate of the video will be lowered by at least one level; and
   If the CPU load detection parameter is below the preset security value, then it will be further determined whether a current network speed satisfies a raising condition, and if so, then the resolution, the frame rate, and/or the bit rate of the video will be raised by at least one level; otherwise, the frame rate and/or the bit rate of the video will be raised by at least one level.

In this embodiment, the CPU load detection parameter is generally adjusted in the following ranges: (1) a range of preset safety values, which can be set freely, e.g., below 40% or from 40% to 60%; and (2) a range of preset peaks, which can be set freely, e.g., from 85% to 90%, above 90%, etc.

The technical solution according to the embodiment of the method illustrated in Fig.2 will be described below in details by way of a particular application example. Particularly during video call, the utilization ratio of the CPU in the terminal is detected in real time, and the definition parameter of the video is adjusted according to the utilization ratio according to the preset adjusting strategy in the following approaches without any limitation thereto:
1) If the utilization ratio of the CPU exceeds 90%, the resolution of the video will be lowered by one level.
   For example, if the current resolution is 720P, then the resolution can be lowered appropriately to 480P; if the current resolution is 480P, then the resolution will be lowered to 320P; and if the resolution is the lowest, then the corresponding frame rate and bit rate will be lowered by one level.
(2) If the current resolution of the CPU is from 85% to 90%, then both the frame rate and the bit rate of the video will be lowered by one level; and if both of them are the lowest, then they will be kept unchanged;
(3) If the current resolution of the CPU is from 40% to 60%, then both the frame rate and the bit rate of the video will be raised by one level; and
(4) If the current resolution of the CPU is below 40%, then a current network speed (a current network bandwidth) will be detected, and it will be determined whether the current network speed can support raising of the resolution of the video by one level, and if so, then it will be raised by one level.

In the solution to adjusting the definition of a video adaptively according to this embodiment, the definition parameter (any one or combination of the bit rate, the frame rate, and the resolution) of the video can be adjusted adaptively by detecting the load of the CPU to thereby ensure normal video call in operation, and also better fluidity thereof.

Moreover the network bandwidth can be detected while detecting the load of the CPU, and if it is determined that the current network bandwidth is not sufficient to support the current resolution, then the resolution, the bit rate, and/or the frame rate will be adjusted down automatically.

With the solution above to adjusting in real time the definition of a video adaptively, the resolution, one or more of the frame rate, and the bit rate of a video can be adjusted automatically according to a detection result to thereby bring better experience of video call for a user, and all of this technical solution can be implemented in an algorithm built in program without requiring the user to adjust manually the respective complex parameters.

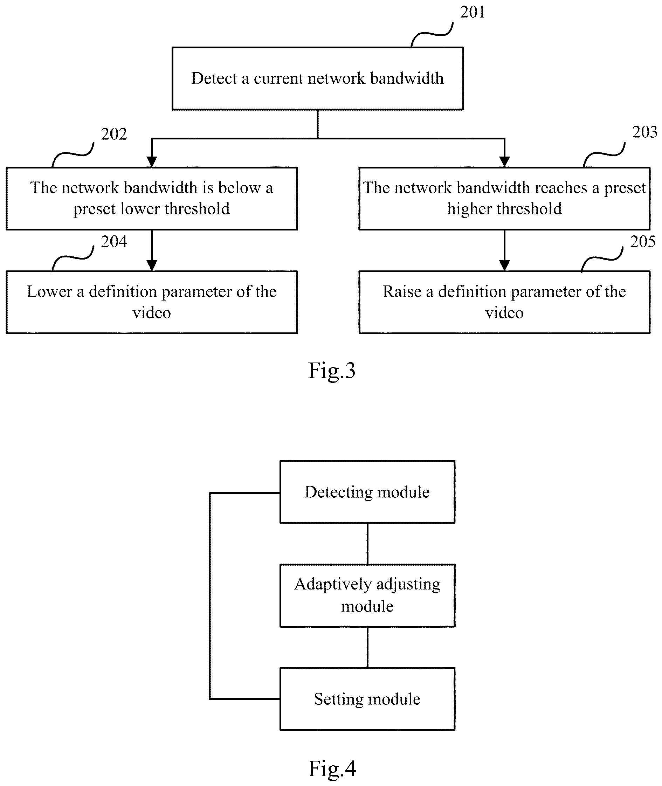

Fig.3 is a flow chart of a second embodiment of a method for adjusting the definition of a video adaptively according to the invention, and this embodiment can be combined with the technical solution according to the first embodiment above. As illustrated in Fig.3, the method according to this embodiment can include the following steps:
The operation 201 is to detect a current network bandwidth of a video call;
The operation 202 is to determine from the detected current network bandwidth whether the current network bandwidth is below a preset lower threshold which is a second preset threshold, e.g., 5M/s, and if so, then the flow will proceed to the operation 204;
The operation 203 is to determine whether the current network bandwidth reaches a preset higher threshold which is a fourth preset threshold more than the second preset threshold, e.g., 10M/s, and if so, then the flow will proceed to the operation 205;
The operation 204 is to lower a definition parameter of the video according to a preset adjusting strategy; and
The operation 205 is to raise a definition parameter of the video according to a preset adjusting strategy.

Here there is further the following terminal parameter influencing a quality of the video, and a real-time user experience effect of the video in video call:
A second parameter: a network bandwidth.

In this embodiment, the definition parameter of the video is generally adjusted in the following ranges:
a parameter A represents a bit rate of the video ranging from 1000 to 2000 bits/seconds (bits/s), that is, more than or equal to 1000 bits/s, and less than or equal to 2000 bits/s. In this embodiment, the bit rate of the video is divided into levels of 1000 bits/s, 1100 bits/s, 1200 bits/s, 1300 bits/s, 1400 bits/s, 1500 bits/s, etc.
a parameter B represents a frame rate (Frames Per Second (FPS)) of the video ranging from 10 to 20 frames/second (frames/s), that is, more than or equal to 10 frames/s, and less than or equal to 20 frames/s. In this embodiment, the frame rate of the video is divided into levels of 10 frames/s, 11 frames/s, 12 frames/s, 13 frames/s, 14 frames/s, 15 frames/s, etc.
a parameter C is a resolution of the video including levels of 720P, 480P, 320P, etc.

Preferably in this embodiment, if a video call is enabled, then the network bandwidth will be detected and matched with a range of resolutions adapted thereto to thereby preset an initial resolution. For example, if the initial network bandwidth ranges from 1M to 2M, that is, the initial network bandwidth lies in the interval of (1M, 2M], where the initial network bandwidth is higher than 1M and lower than or equal to 2M, then it will be matched with the resolution of 720P; if the initial network bandwidth ranges from 500k to 1M, that is, the initial network bandwidth lies in the interval of (500k, 1M], where the initial network bandwidth is higher than 500k and lower than or equal to 1M, then it will be matched with the resolution of 480P; and if the initial network bandwidth is lower than 500k, that is, the initial network bandwidth lies in the interval of (0, 500K], where the initial network bandwidth is higher than 0 and lower than or equal to 500K, then it will be matched with the resolution of 320P.

Moreover preferably if the video call is enabled, then both the frame rate and the bit rate will be assigned with values at the highest levels, for example, the frame rate is 15 frames/s, and the bit rate is 1500 bits/s.

In this embodiment, during the video call, the current network bandwidth is detected in real time, and if the detected current network bandwidth is not sufficient to satisfy the current resolution, then the current resolution will be lowered by one level. If the detected current network bandwidth is improved to raise the resolution of the video, the resolution of the video will be raised automatically.

Moreover the network bandwidth can be further detected while detecting the load of the CPU, and if it is determined from the detected load of the CPU, and the detected bandwidth that the current bandwidth is not sufficient to support the current resolution, then one or more of the resolution, the bit rate, and the frame bit will be correspondingly adjusted down automatically; and if it is determined that the utilization rate of the CPU is below 40%, and the current network speed (the network bandwidth) satisfies the condition to raise the resolution of the video, then the resolution of the video will be raised by one level. Thus with the method according to the embodiment of the invention, one or more of the resolution, the bit rate, and the frame bit of the video can be adjusted dynamically to thereby bring a better experience of video call for the user.

It shall be noted the definition parameter of the video can be adjusted dynamically according to the utilization ratio of the CPU in a similar way to the way in which the definition parameter of the video is adjusted dynamically according to the load detection parameter of the CPU, so a repeated description thereof will be omitted here. In a particular implementation, the definition parameter of the video can be adjusted dynamically according to one of the current load detection parameter of the CPU, utilization ratio of the CPU, and network bandwidth separately, or a combination thereof, and in another embodiment of the invention, the terminal parameter can further include another parameter, a network delay, etc.

An apparatus for adjusting the definition of a video adaptively according to an embodiment of the invention includes: a detecting module configured to detect a terminal parameter influencing a quality of a video call, in a terminal device participating in the video call; and an adaptively adjusting module configured to adjust a definition parameter of the video upon determining that the terminal parameter satisfies a preset condition, where the definition parameter of the video includes any one or combination of a resolution, a bit rate, and a frame rate of the video.

In a possible implementation, in the apparatus according to the embodiment of the invention, the terminal parameter includes any one or combination of a current Central Processing Unit (CPU) load detection parameter, a current memory utilization ratio, and a current network bandwidth.

In a possible implementation, in the apparatus according to the embodiment of the invention, the adaptively adjusting module is configured to lower the definition parameter of the video upon determining that the terminal parameter satisfies a first preset condition, wherein the first preset condition includes any one or combination of: that the terminal parameter includes the current CPU load detection parameter and the current CPU load detection parameter reaches a preset peak; that the terminal parameter includes the current memory utilization ratio and the current memory utilization ratio is above a first preset threshold; and that the terminal parameter includes the current network bandwidth and the current network bandwidth below a second preset threshold.

In a possible implementation, in the apparatus according to the embodiment of the invention, the adaptively adjusting module configured to lower the definition parameter of the video is configured: to divide in advance the resolution, the bit rate, and the frame rate of the video into a number of levels in a descending order, and to lower the resolution, the bit rate, and/or the frame rate of the video by at least one level.

In a possible implementation, in the apparatus according to the embodiment of the invention, the adaptively adjusting module is configured to raise the definition parameter of the video upon determining that the terminal parameter satisfies a second preset condition, where the second preset condition includes any one or combination of: that the terminal parameter includes the current CPU load detection parameter and the current CPU load detection parameter is below a preset safety value; that the terminal parameter includes the current memory utilization ratio and the current memory utilization ratio is below a third preset threshold; and that the terminal parameter includes the current network bandwidth and the current network bandwidth is above a fourth preset threshold, where the third preset threshold is less than the first preset threshold, and the fourth preset threshold is more than the second preset threshold.

In a possible implementation, in the apparatus according to the embodiment of the invention, the adaptively adjusting module configured to raise the definition parameter of the video is configured: to divide in advance the resolution, the bit rate, and the frame rate of the video into a number of levels in a descending order, and to raise the resolution, the bit rate, and/or the frame rate of the video by at least one level.

Fig.4 is a schematic structural diagram of a first embodiment of an apparatus for adjusting the definition of a video adaptively according to the invention, and as illustrated in Fig.4, the apparatus according to this embodiment can include a detecting module, an adaptively adjusting module, and a setting module, where:
The detecting module is configured to detect a current CPU load detection parameter of a terminal device participating in a video call.

The adaptively adjusting module is configured to determine whether the current CPU load detection parameter reaches a preset peak, and if so, to lower a definition parameter of the video according to a preset adjusting strategy, where the definition parameter of the video includes any one or combination of a resolution, a bit rate, and a frame rate of the video.

Furthermore the adaptively adjusting module can be further configured to determine whether the current CPU load detection parameter is below a preset safety value, and if so, to raise the definition parameter of the video according to a preset adjusting strategy.

The setting module configured to set the preset adjusting strategy is configured to divide in advance the bit rate and the frame rate of the video into a number of levels in a descending order, and for the value of the current CPU load detection parameter:
If it is determined that the CPU load detection parameter reaches the preset peak, to lower the resolution, the frame rate, and/or the bit rate of the video by at least one level;
It is determined that the CPU load detection parameter is below the preset security value, then the resolution, to raise the frame rate, and/or the bit rate of the video by at least one level; and/or
If it is determined that the CPU load detection parameter is below the preset security value, then it will be further determined whether a current network speed (network bandwidth) satisfies a preset condition, and if so, then to raise the resolution, the frame rate, and/or the bit rate of the video by at least one level; otherwise, the to raise the frame rate and/or the bit rate of the video by at least one level.

The apparatus according to this embodiment can be configured to implement the technical solution according to the embodiment of the method illustrated in Fig.2, and an implementation principle and a technical effect thereof are similar thereto, so a repeated description thereof will be omitted here.

Similarly to Fig.4, a second embodiment of an apparatus for adjusting the definition of a video adaptively according to the invention also includes a detecting module, an adaptively adjusting module, and a setting module.

The apparatus according to this embodiment is different from the apparatus according to the first embodiment above in that the detecting module in this embodiment is configured to detect a current network bandwidth;
The adaptively adjusting module is configured: if it is determined that the current network bandwidth is below a preset lower threshold, that is, the current network bandwidth is below a second preset threshold, to lower a definition parameter of the video according to a preset adjusting strategy; and if it is determined that the current network bandwidth reaches a preset higher parameter, that is, the current network width is above a fourth preset threshold, to raise the definition parameter of the video according to a preset adjusting strategy, where the second preset threshold and the fourth preset threshold can be set freely while ensuring the fourth preset threshold to be more than the second preset threshold, for example, the second preset threshold is 5M/s, and the fourth preset threshold is 10M/s.

The setting module in this embodiment configured to set the preset adjusting strategy is configured to divide in advance the bit rate and the frame rate of the video into levels in a descending order, and for the current network bandwidth:
If it is determined that the current network bandwidth is below a preset lower threshold, to lower the resolution, the frame rate, and/or the bit rate of the video by at least one level; and
If it is determined that the current network bandwidth reaches a preset higher threshold, to raise the resolution, the frame rate, and/or the bit rate of the video by at least one level.

The setting module is further configured to set the frame rate and the bit rate of the video to values at the highest level if the video call is enabled.

The detecting module is further configured to detect the network bandwidth if video call is enabled.

The setting module is further configured to set an initial resolution according to such a strategy that if the initial network bandwidth ranges from 1M to 2M, that is, the initial network bandwidth lies in the interval of (1M, 2M], where the initial network bandwidth is higher than 1M and lower than or equal to 2M, then the initial resolution will be set to 720P; if the initial network bandwidth ranges from 500k to 1M, that is, the initial network bandwidth lies in the interval of (500k, 1M], where the initial network bandwidth is higher than 500k and lower than or equal to 1M, then the initial resolution will be set to 480P; and if the initial network bandwidth is lower than 500k, that is, the initial network bandwidth lies in the interval of (0, 500K], where the initial network bandwidth is higher than 0 and lower than or equal to 500K, then the initial resolution will be set to 320P.

The apparatus according to this embodiment can be configured to implement the technical solution according to the embodiment of the method illustrated in Fig.3, and an implementation principle and a technical effect thereof are similar thereto, so a repeated description thereof will be omitted here; and the apparatus according to this embodiment can be combined with the technical solution according to the first embodiment of the apparatus above.

A terminal for adjusting the definition of a video adaptively according to an embodiment of the invention includes the apparatus above for adjusting the definition of a video adaptively, and correspondingly can perform implement the technical solution according to any one of the method embodiments illustrated in Fig.2 and Fig.3, and an implementation principle and a technical effect thereof are similar thereto, so a repeated description thereof will be omitted here.

An embodiment of the invention provides a terminal device including a detecting component, a memory, and one or more processors, where one or more programs are stored in the memory, and when the one or more programs are executed by the one or more processors: the detecting component is configured to detect a terminal parameter influencing a quality of a video call, in the terminal device participating in the video call; and the processor is configured to adjust a definition parameter of a video upon determining that the terminal parameter satisfies a preset condition, where the definition parameter of the video includes any one or combination of a resolution, a bit rate, and a frame rate of the video.

In a possible implementation, in the terminal device according to the embodiment of the invention, the terminal parameter includes any one or combination of a current Central Processing Unit (CPU) load detection parameter, a current memory utilization ratio, and a current network bandwidth.

In a possible implementation, in the terminal device according to the embodiment of the invention, the processor is configured to lower the definition parameter of the video upon determining that the terminal parameter satisfies a first preset condition, wherein the first preset condition includes any one or combination of: that the terminal parameter includes the current CPU load detection parameter and the current CPU load detection parameter reaches a preset peak; that the terminal parameter includes the current memory utilization ratio and the current memory utilization ratio is above a first preset threshold; and that the terminal parameter includes the current network bandwidth and the current network bandwidth is below a second preset threshold.

In a possible implementation, in the terminal device according to the embodiment of the invention, the processor configured to lower the definition parameter of the video is configured: to divide in advance the resolution, the bit rate, and the frame rate of the video into a number of levels in a descending order, and to lower the resolution, the bit rate, and/or the frame rate of the video by at least one level.

In a possible implementation, in the terminal device according to the embodiment of the invention, the processor is configured to raise the definition parameter of the video upon determining that the terminal parameter satisfies a second preset condition, where the second preset condition includes any one or combination of: that the terminal parameter includes the current CPU load detection parameter and the current CPU load detection parameter is below a preset safety value; that the terminal parameter includes the current memory utilization ratio and the current memory utilization ratio is below a third preset threshold; and that the terminal parameter includes the current network bandwidth and the current network bandwidth is above a fourth preset threshold, where the third preset threshold is less than the first preset threshold, and the fourth preset threshold is more than the second preset threshold.

In a possible implementation, in the terminal device according to the embodiment of the invention, the processor configured to raise the definition parameter of the video is configured: to divide in advance the resolution, the bit rate, and the frame rate of the video into a number of levels in a descending order, and to raise the resolution, the bit rate, and/or the frame rate of the video by at least one level.

In a possible implementation, in the terminal device according to the embodiment of the invention, the e processor is further configured to set the frame rate and the bit rate of the video to values at the highest level if the video call is enabled.

In a possible implementation, in the terminal device according to the embodiment of the invention, the detecting component is further configured to detect the network bandwidth if video call is enabled; and the processor is further configured to set an initial resolution of the video according to such a strategy that if the initial network bandwidth lies in the interval of (1M, 2M], to set the initial resolution to 720P; if the initial network bandwidth lies in the interval of (500k, 1M], to set the initial resolution to 480P; and if the initial network bandwidth lies in the interval of (0, 500K], to set the initial resolution to 320P.

An embodiment of the invention further provides another terminal device including a processor, and a memory in which there is stored program for performing the operations of: detecting a terminal parameter influencing a quality of a video call, in the terminal device participating in the video call; and adjusting a definition parameter of the video upon determining that the terminal parameter satisfies a preset condition, where the definition parameter of the video includes any one or combination of a resolution, a bit rate, and a frame rate of the video; and the processor is configured to execute the programs stored in the memory.

Those ordinarily skilled in the art can appreciate that all or a part of the operations in the methods according to the embodiments described above can be performed by program instructing relevant hardware, where the programs can be stored in a computer readable storage medium, and the programs can perform one or a combination of the operations in the embodiments of the method upon being executed; and the storage medium includes an ROM, an RAM, a magnetic disc, an optical disk, or any other medium which can store program codes.

The embodiments of the apparatus described above are merely exemplary, where the units described as separate components may or may not be physically separate, and the components illustrated as elements may or may not be physical units, that is, they can be collocated or can be distributed onto a number of network elements. A part or all of the modules can be selected as needed in reality for the purpose of the solution according to the embodiments of the invention. This can be understood and practiced by those ordinarily skilled in the art without any inventive effort.

Lastly it shall be noted that the respective embodiments above are merely intended to illustrate but not to limit the technical solution of the invention; and although the invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the invention as claimed.

## Claims

1. A method for adjusting definition of a video, the method comprising:
detecting a terminal parameter influencing a quality of a video call, in a terminal device participating in the video call; and
adjusting a definition parameter of the video upon determining that the terminal parameter satisfies a preset condition;
wherein the definition parameter of the video comprises any one or combination of a resolution, a bit rate, and a frame rate of the video.

2. The method according to claim 1, wherein the terminal parameter comprises any one or combination of a current Central Processing Unit, CPU, load detection parameter, a current memory utilization ratio, and a current network bandwidth.

3. The method according to claim 2, wherein adjusting the definition parameter of the video upon determining that the terminal parameter satisfies the preset condition comprises:
lowering the definition parameter of the video upon determining that the terminal parameter satisfies a first preset condition, wherein the first preset condition comprises any one or combination of:
that the terminal parameter comprises the current CPU load detection parameter and the current CPU load detection parameter reaches a preset peak;
that the terminal parameter comprises the current memory utilization ratio and the current memory utilization ratio is above a first preset threshold; and
that the terminal parameter comprises the current network bandwidth and the current network bandwidth is below a second preset threshold.

4. The method according to claim 3, wherein lowering the definition parameter of the video comprises:
dividing in advance the resolution, the bit rate, and the frame rate of the video into a number of levels in a descending order, and lowering the resolution, the bit rate, and/or the frame rate of the video by at least one level.

5. The method according to any one of claims 2 to 4, wherein adjusting the definition parameter of the video upon determining that the terminal parameter satisfies the preset condition comprises:
raising the definition parameter of the video upon determining that the terminal parameter satisfies a second preset condition, wherein the second preset condition comprises any one or combination of:
that the terminal parameter comprises the current CPU load detection parameter and the current CPU load detection parameter is below a preset safety value;
that the terminal parameter comprises the current memory utilization ratio and the current memory utilization ratio is below a third preset threshold; and
that the terminal parameter comprises the current network bandwidth and the current network bandwidth is above a fourth preset threshold;
wherein the third preset threshold is less than the first preset threshold, and the fourth preset threshold is more than the second preset threshold

6. The method according to claim 5, wherein raising the definition parameter of the video comprises: dividing in advance the resolution, the bit rate, and the frame rate of the video into a number of levels in a descending order, and raising the resolution, the bit rate, and/or the frame rate of the video by at least one level.

7. An apparatus for adjusting definition of a video, the apparatus comprising:
a detecting module configured to detect a terminal parameter influencing a quality of a video call, in a terminal device participating in the video call; and
an adaptively adjusting module configured to adjust a definition parameter of the video upon determining that the terminal parameter satisfies a preset condition;
wherein the definition parameter of the video comprises any one or combination of a resolution, a bit rate, and a frame rate of the video.

8. The apparatus according to claim 7, wherein the terminal parameter comprises any one or combination of a current Central Processing Unit, CPU, load detection parameter, a current memory utilization ratio, and a current network bandwidth.

9. The apparatus according to claim 8, wherein the adaptively adjusting module is configured:
to lower the definition parameter of the video upon determining that the terminal parameter satisfies a first preset condition, wherein the first preset condition comprises any one or combination of:
that the terminal parameter comprises the current CPU load detection parameter and the current CPU load detection parameter reaches a preset peak;
that the terminal parameter comprises the current memory utilization ratio and the current memory utilization ratio is above a first preset threshold; and
that the terminal parameter comprises the current network bandwidth and the current network bandwidth is below a second preset threshold.

10. The apparatus according to claim 9, wherein the adaptively adjusting module configured to lower the definition parameter of the video is configured:
to divide in advance the resolution, the bit rate, and the frame rate of the video into a number of levels in a descending order, and to lower the resolution, the bit rate, and/or the frame rate of the video by at least one level.

11. The apparatus according to any one of claims 8 to 10, wherein the adaptively adjusting module is configured:
to raise the definition parameter of the video upon determining that the terminal parameter satisfies a second preset condition, wherein the second preset condition comprises any one or combination of:
that the terminal parameter comprises the current CPU load detection parameter and the current CPU load detection parameter is below a preset safety value;
that the terminal parameter comprises the current memory utilization ratio and the current memory utilization ratio is below a third preset threshold; and
that the terminal parameter comprises the current network bandwidth and the current network bandwidth is above a fourth preset threshold;
wherein the third preset threshold is less than the first preset threshold, and the fourth preset threshold is more than the second preset threshold

12. The apparatus according to claim 11, wherein the adaptively adjusting module configured to raise the definition parameter of the video is configured:
to divide in advance the resolution, the bit rate, and the frame rate of the video into a number of levels in a descending order, and to raise the resolution, the bit rate, and/or the frame rate of the video by at least one level.

13. A terminal device, comprising a detecting component, a memory, and one or more processors, wherein:
one or more programs are stored in the memory, wherein when the one or more programs are executed by the one or more processors:
the detecting component is configured to detect a terminal parameter influencing a quality of a video call, in the terminal device participating in the video call; and
the processor is configured to adjust a definition parameter of the video upon determining that the terminal parameter satisfies a preset condition;
wherein the definition parameter of the video comprises any one or combination of a resolution, a bit rate, and a frame rate of the video.

14. The terminal device according to claim 13, wherein the terminal parameter comprises any one or combination of a current Central Processing Unit, CPU, load detection parameter, a current memory utilization ratio, and a current network bandwidth.

15. The terminal device according to claim 14, wherein the processor is configured:
to lower the definition parameter of the video upon determining that the terminal parameter satisfies a first preset condition, wherein the first preset condition comprises any one or combination of:
that the terminal parameter comprises the current CPU load detection parameter and the current CPU load detection parameter reaches a preset peak;
that the terminal parameter comprises the current memory utilization ratio and the current memory utilization ratio is above a first preset threshold; and
that the terminal parameter comprises the current network bandwidth and the current network bandwidth is below a second preset threshold.

16. The terminal device according to claim 15, wherein the processor configured to lower the definition parameter of the video is configured is configured:
to divide in advance the resolution, the bit rate, and the frame rate of the video into a number of levels in a descending order, and to lower the resolution, the bit rate, and/or the frame rate of the video by at least one level.

17. The terminal device according to any one of claims 14 to 16, wherein the processor is configured:
to raise the definition parameter of the video upon determining that the terminal parameter satisfies a second preset condition, wherein the second preset condition comprises any one or combination of:
that the terminal parameter comprises the current CPU load detection parameter and the current CPU load detection parameter is below a preset safety value;
that the terminal parameter comprises the current memory utilization ratio and the current memory utilization ratio is below a third preset threshold; and
that the terminal parameter comprises the current network bandwidth and the current network bandwidth is above a fourth preset threshold;
wherein the third preset threshold is less than the first preset threshold, and the fourth preset threshold is more than the second preset threshold

18. The terminal device according to claim 17, wherein the processor configured to raise the definition parameter of the video is configured:
to divide in advance the resolution, the bit rate, and the frame rate of the video into a number of levels in a descending order, and to raise the resolution, the bit rate, and/or the frame rate of the video by at least one level.

19. A terminal device, comprising a processor and a memory, wherein:
the memory stores therein program for performing operations of:
detecting a terminal parameter influencing a quality of a video call, in the terminal device participating in the video call; and
adjusting a definition parameter of a video upon determining that the terminal parameter satisfies a preset condition, wherein the definition parameter of the video comprises any one or combination of a resolution, a bit rate, and a frame rate of the video; and
the processor is configured to execute the program stored in the memory.

20. A storage medium, storing therein program for performing the method according to any one of claims 1 to 6.
